Europäisches Patentamt

European Patent Office

Office européen des brevets

(11) Publication number: **0 301 362**
**A1**

## EUROPEAN PATENT APPLICATION

(21) Application number: 88111557.0

(22) Date of filing: **19.07.88**

(51) Int. Cl.⁴ **A01G 9/02**

(30) Priority: 30.07.87 IT 358187

(43) Date of publication of application:
01.02.89 Bulletin 89/05

(84) Designated Contracting States:
**DE ES FR GB**

(71) Applicant: **AGRIFUTURA S.r.l.**
**Via Verdi 28b**
**I-40067 Rastignano Podere Campazzo**
**(Bologna)(IT)**

(72) Inventor: **Casadio, Roberto**
**Via Barbiano 10**
**I-40136 Bologna(IT)**

(74) Representative: **Modiano, Guido et al**
**MODIANO, JOSIF, PISANTY & STAUB**
**Modiano & Associati Via Meravigli, 16**
**I-20123 Milan(IT)**

(54) **Plant-holder device for cultivating flowers, vegetables and the like.**

(57) The plant-holder device comprises a base (2) and a tubular body (1) which extends vertically from the base (2) and externally defines a plurality of cups (3) adapted to contain plants. A water feed duct (5) is arranged longitudinally inside the tubular body (1), and communicates with a reservoir (10) for periodically distributing water to each of the cups (3). The reservoir (10) may be arranged for delivering water to the water feed duct (5) by gravity, or wich the interposition of a pump (7).

FIG.2

EP 0 301 362 A1

## PLANT-HOLDER DEVICE FOR CULTIVATING FLOWERS, VEGETABLES AND THE LIKE

The present invention relates to a plant-holder device for cultivating flowers, vegetables and the like.

As known, widespread use is made of vases for the cultivation of ornamental plants, flowers or vegetables. Besides requiring adequate space, such cultivation techniques require constant care, especially regarding regular and quantitavely correct watering of the plants.

In order to overcome these limitations, various devices intended to periodically perform the watering of plants have been proposed. Said devices are however rather complicated and accordingly have not become widespread.

The aim of the present invention is to solve the above described problem by providing a plant-holder device which allows the cultivation of flowers, vegetables and the like in an easy manner, and which can periodically distribute the required amount of water to the plants.

Within this aim an object of the present invention is to provide a device which is simple in concept, has limited bulk, is safe and reliable in operation and versatile in use, as well as relatively economical in cost.

This aim and this object are both achieved, according to the invention, by the present plant-holder device for cultivating flowers, vegetables and the like, which is characterized in that it comprises reservoir means, at least one base, at least one tubular body extending substantially vertically from said base and externally defining a plurality of cup-like containers adapted for containing plants, a water feed duct communicating with said reservoir means and being arranged longitudinally inside said tubular body, and means for periodically distributing water to each of said cup-like containers.

The characteristics and advantages of the invention will become apparent from the detailed description of a preferred embodiment of the plant-holder device for cultivating flowers, vegetables and the like, illustrated only by way on non-limitative example in the accompanying drawings, wherein:

figure 1 is a lateral view of the plant-holder device according to the invention;

figure 2 is a longitudinal sectional view thereof;

figure 3 is a top view thereof.

With particular reference to the above described figures, the plant-holder device according to the invention is substantially consitituted by a cylindrical tubular body 1 which extends substantially vertically from a supporting base 2, both preferably manufactured in plastic material.

The tubular body 1 is externally provided with a plurality of regularly distributed cup-like containers or cups 3 each whereof is advantageously intended to contain one of the plants to be grown. The cups 3 are conveniently defined between a lower fold 3a and an upper fold 3b respectively defined towards the inside and towards the outside of the tubular body 1, starting from a related cut provided substantially horizontally on said tubular body. In the illustrated case the cups 3 are expediently arranged on four vertical rows and at vertically offset levels with respect to the adjacent rows.

The base 2, which is internally hollow and adapted to be appropriately ballasted by filling with ballast material such as water, may substantially define the shape of a truncated cone. The base 2 is centrally provided with a cylindrical accommodation seat 4 for coupling with the lower end of the tubular body 1.

A duct 5 for feeding water to the plants contained in the cups 3 is arranged axially inside the tubular body 1. The duct 5 has a plurality of holes respectively at said cups 3 and has related tubes 6 applied for the drip-feed distribution of the water to said cups. The tubes 6 lead to the edge of the folds 3b, where they have related couplings to the tubular body 1. It should be noted that the duct 5 is supported inside the tubular body 1 by said tubes 6.

The duct 5 is adapted to be gravity fed by means of a suitable bottle-like container or reservoir 10 arranged at the top of the tubular body 1 and to be refilled periodically, e.g. daily, with water for the plants.

However, it is conveniently possible to alternatively provide a small pump 7 which, when actuated by conventional timer means, periodically pumps water to the duct 5 from a reservoir arranged at the base 2. The pump 7 can be adapted to be accommodated inside the base 2 which in this case acts as a water extraction tank or reservoir. As it is intended to be emptied of its water, the base 2 must be in this case conveniently ballasted, e.g., with a mass of cement or the like. If vice versa a greater operating autonomy is required, it is possible to connect the pump 7 to a suitable external tank having a relatively high capacity, or even to a mains supply with the interposition of a cistern and water-level regulation valve.

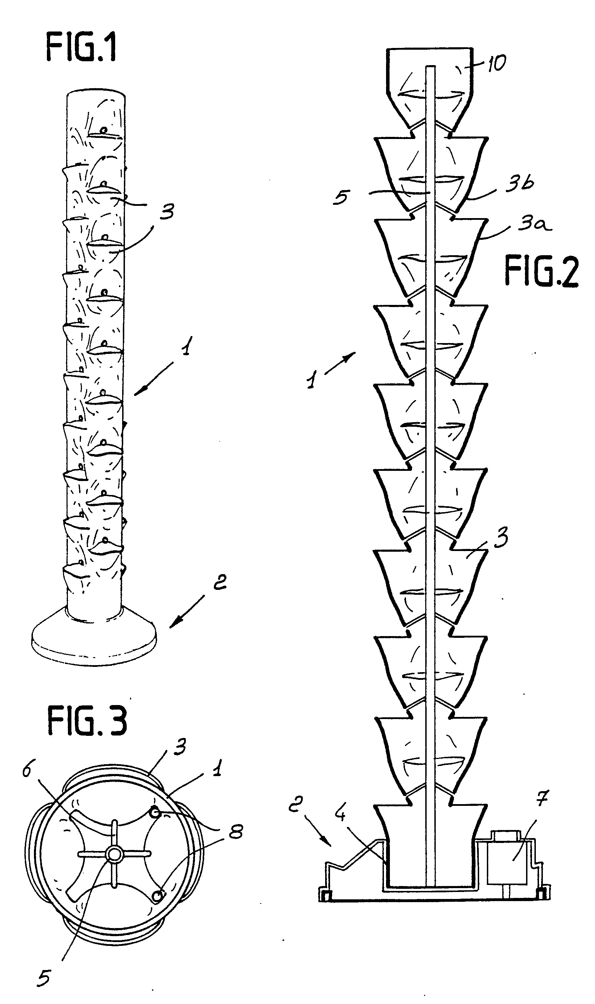

It is furthermore possible to heat the described device, so as to facilitate the cultivation of certain types of plants, even regardless of the season's climate. For this purpose an electric wire resistor 8 is expediently adopted which, as shown in figure 3, is adapted to be arranged along vertical grooves defined inside the tubular body 1 between the folds 3b. The heating is conveniently adjustable by means of a thermostat adapted to activate the electric power supply of the resistor 8 at a preset temperature threshold.

The described plant-holder device allows the cultivation, in a relatively small space, of both ornamental plants and plants for the production of vegetables and the like, such as e.g. salad, basil, parsley or strawberries. The device ensures the optimum distribution of a preset amount of water by drip-feed or pump-assisted means. Indeed the use of the pump 7 allows to avoid periodic filling of the water feed container or reservoir, performing the automatic watering of the plants even for relatively long time periods.

In the practical embodiment of the invention the materials employed, as well as the shapes and dimensions, may be any according to the requirements.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. Plant-holder device for cultivating flowers, vegetables and the like, characterized in that it comprises reservoir means, at least one base, at least one tubular body extending substantially vertically from said base and externally defining a plurality of cup-like containers adapted for containing plants, a water feed duct communicating with said reservoir means and being arranged longitudinally inside said tubular body, and means for periodically distributing water to each of said cup-like containers.

2. Device according to claim 1, characterized in that said duct is adapted to be fed by at least one pump, said pump being controlled by conventional timer means, accommodated inside said base and connected to a water tank.

3. Device according to claim 1, characterized in that said feed duct has a plurality of holes respectively at said cups and has related tubes applied for the drip-feed distribution of water to said cup-like containers.

4. Device according to claim 1, characterized in that it comprises electric means for heating said cup-like containers arranged longitudinally on the inner surface of said tubular body and adjustable by means of thermostat means.

5. Device according to claim 1, characterized in that said cup-like containers are defined between a lower fold and an upper fold provided respectively towards the outside and towards the inside of said tubular body, starting from related cuts provided horizontally at regularly distributed levels on said tubular body.

FIG.1

FIG.2

FIG.3

European Patent Office

**EUROPEAN SEARCH REPORT**

Application Number

EP 88 11 1557

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-2 070 403 (HOWGILL) <br> * Whole document * <br> --- | 1,3,5 | A 01 G 9/02 |
| X | GB-A-1 486 553 (HOWGILL) <br> * Page 2, line 55 - page 3, line 90; figures 1-3 * <br> --- | 1,2 | |
| A | US-A-3 606 697 (EDEN) <br> * Column 3, lines 33-66; claim 1; figures 1-5 * <br> --- | 4 | |
| A | FR-A-1 528 482 (MORIN) <br> * Whole document * <br> --- | 1 | |
| A | CH-A- 231 444 (REPOSSI) <br> * Whole document * <br> ----- | 1 | |
| | | | TECHNICAL FIELDS SEARCHED (Int. Cl.4) |
| | | | A 01 G |

The present search report has been drawn up for all claims

| Place of search | Date of completion of the search | Examiner |
|---|---|---|
| THE HAGUE | 03-11-1988 | HERYGERS J.J. |